# FASCICULE DE BREVET EUROPEEN

(11) **EP 1 712 416 B1**
(45) Date de publication et mention de la délivrance du brevet: **26.08.2009**
(21) Numéro de dépôt: 06290525.2
(22) Date de dépôt: 31.03.2006
(51) Int. Cl.: B60Q 1/115

(54) **Procédé d'étalonnage d'un dispositif de réglage automatique de la position angulaire d'un projecteur**
Eichungsverfahren für eine automatische Verstellvorrichtung des Neigungswinkels eines Scheinwerfers
Calibration method for a headlight angular position automatic adjusting device

(30) Priorité: 12.04.2005 FR 0503648
(43) Date de publication de la demande: 18.10.2006
(73) Titulaire: VALEO VISION, 93012 Bobigny Cedex (FR)
(72) Inventeur: Koulouh, Hassan, 93500 Pantin (FR); Phan Van Ho, Robert, 93350 Le Bourget (FR)

(56) Documents cités:
- FR-A- 2 368 076
- FR-A- 2 800 685
- FR-A- 2 828 663
- US-A1- 2004 240 218
- US-A1- 2005 002 195

## Description

L'invention concerne un procédé d'étalonnage d'un dispositif de réglage automatique de la position angulaire d'au moins un projecteur de véhicule automobile.

L'invention concerne plus particulièrement un procédé d'étalonnage d'un dispositif de réglage automatique de la position angulaire d'au moins un projecteur de véhicule automobile qui est monté pivotant autour d'un axe transversal par rapport à la carrosserie du véhicule, le dispositif de réglage réglant la position angulaire du projecteur en fonction de l'assiette longitudinale de la carrosserie du véhicule, le dispositif de réglage automatique comprenant :
- au moins un actionneur apte à faire pivoter le projecteur ;
- au moins un capteur qui mesure l'assiette du véhicule et qui émet un signal d'assiette représentatif de l'assiette instantanée mesurée du véhicule, un écart étant susceptible d'exister entre l'assiette mesurée et l'assiette réelle de la carrosserie du véhicule ;
- une unité électronique de commande de l'actionneur en fonction du signal d'assiette mesurée qui est apte à traiter le signal d'assiette pour une plage d'assiettes mesurées qui est délimitée par des bornes extrêmes d'efficacité ; le procédé comportant une étape de compensation de l'écart entre l'assiette réelle et l'assiette mesurée.

Les projecteurs de véhicules automobiles, et notamment ceux que l'on appelle couramment les feux de croisement, émettent un faisceau lumineux qui comporte une ligne supérieure de coupure qui délimite une zone éclairée et une zone non éclairée à l'avant du véhicule, c'est-à-dire qu'une partie supérieure du faisceau lumineux est tronquée de manière à ne pas éblouir les conducteurs des véhicules roulant en sens inverse.

Les projecteurs sont solidaires de la carrosserie du véhicule. Or, l'état de charge du véhicule se traduit par un changement d'assiette longitudinale de la carrosserie du véhicule. Ainsi, lorsque le véhicule est chargé, la carrosserie véhicule est inclinée, généralement vers l'arrière, par rapport au plan de la route, ce qui entraîne une remontée de la ligne de coupure du faisceau lumineux émis par les projecteurs.

Il est connu d'équiper les véhicules automobiles de dispositifs de réglage automatique de la position angulaire des projecteurs du véhicule pour corriger automatiquement la position angulaire des projecteurs par rapport à la carrosserie en fonction de l'assiette du véhicule de façon que le projecteur occupe constamment une position angulaire idéale dans laquelle la route est suffisamment éclairée sans éblouir les conducteurs de véhicules roulant en sens inverse.

Lors du montage du dispositif de réglage sur le véhicule automobile, les capteurs d'assiette sont positionnés par rapport à la carrosserie de manière qu'une assiette de référence mesurée par le capteur coïncide avec une assiette réelle de référence du véhicule, par exemple l'assiette réelle du véhicule non chargé.

Cependant, le positionnement des capteurs d'assiette est réalisé avec un intervalle de tolérance qui se traduit par un écart entre l'assiette mesurée du véhicule et l'assiette réelle du véhicule.

Par exemple, l'assiette réelle de référence du véhicule correspond à son assiette réelle lorsque le véhicule n'est pas chargé. Cependant, du fait de l'intervalle de tolérance de positionnement des capteurs, l'assiette mesurée par les capteurs est susceptible de correspondre à une assiette d'un véhicule chargé, c'est-à-dire incliné vers l'arrière, ou "trop peu" chargé, c'est-à-dire incliné vers l'avant.

En conséquence, l'actionneur est commandé par l'unité électronique de commande de manière à faire pivoter le projecteur dans une position angulaire ne correspondant pas à sa position angulaire idéale. Le projecteur risque donc d'éblouir les conducteurs roulant en sens inverse ou, au contraire, de ne pas éclairer suffisamment la route à l'avant du véhicule.

On connaît déjà des procédés pour étalonner le dispositif de réglage de manière à compenser l'écart existant entre l'assiette réelle et l'assiette mesurée, notamment par le document FR-A-2.843.082.

Dans ce dispositif, la tension du signal émis par le capteur d'assiette est proportionnelle à l'assiette mesurée par le capteur. Afin de compenser l'écart existant entre l'assiette mesurée et l'assiette réelle du véhicule, l'unité électronique de commande comporte un potentiomètre qui est apte à ajuster la tension du signal émis par le capteur.

L'étalonnage est réalisé lorsque l'assiette du véhicule coïncide avec son assiette de référence. La tension du signal émis est alors ajustée de manière à la faire coïncider avec une tension de référence correspondant à l'assiette réelle de référence du véhicule. Cette tension ajustée est ensuite utilisée comme référence pour commander l'actionneur.

Après le montage du dispositif de réglage sur le véhicule, le dispositif est donc étalonné par un opérateur qui manoeuvre le potentiomètre de manière à ajuster la tension du signal d'assiette.

Une fois l'étalonnage effectué, le dispositif de réglage est apte à corriger correctement la position angulaire du projecteur durant toute la vie du véhicule.

Par ailleurs, lors du montage du dispositif de réglage et des projecteurs sur le véhicule, l'actionneur et/ou le projecteur associé sont eux aussi positionnés avec une tolérance mécanique. Même après l'étalonnage du dispositif de réglage, il est donc susceptible de subsister un écart entre la position angulaire réelle du projecteur et sa position angulaire idéale.

Après l'étape de compensation de l'écart entre l'assiette mesurée et l'assiette réelle, il est donc nécessaire au cours de l'assemblage du véhicule d'effectuer une étape de rattrapage de la tolérance mécanique. A cet effet, l'actionneur est muni d'un organe de calibration qui permet d'agir sur la géométrie du mécanisme d'entraînement en pivotement du projecteur pour corriger la position angulaire du projecteur.

Ce procédé d'étalonnage requiert cependant une première étape de compensation de l'écart de mesure du capteur, et une deuxième étape de correction de la tolérance mécanique de l'actionneur par rapport au projecteur.

D'autres systèmes, tels que les documents US 2004/240218 et US 2005/002195 décrivent des procédés d'étalonnage également en deux étapes : une étape permettant de saisir une valeur de référence mesurée par les capteurs d'assiette, lorsque la voiture est sur route horizontale, et une étape dans laquelle l'axe optique de la lampe est ajusté.

Le brevet FR2828663 décrit un procédé d'étalonnage dans lequel l'écart entre l'assiette mesurée et l'assiette réelle de la carrosserie du véhicule est compensée par un unique ajustement de visée. Pour que l'organe de manoeuvre puisse conserver une plage de manoeuvre nécessaire pour l'entraînement du miroir, la course du module optique est limitée entre des bornes définissant une course total comprenant la course nécessaire, correspondant à la plage de manoeuvre nécessaire, augmentée de l'écart entre la mesure de l'assiette du véhicule et son assiette réelle. Cependant selon ce document FR2828663, il ne serait pas possible de définir cette erreur avant le montage, et par conséquent ce système ne fonctionnerait pas convenablement. Aussi FR2828663 enseigne d'abandonner l'étalonnage par unique réglage mécanique, en lui ajoutant une étape de mémorisation d'une valeur de référence.

L'invention propose un procédé qui permette de réaliser l'étalonnage plus rapidement en réalisant moins d'opérations que celles préconisées dans l'art antérieur.

L'invention propose ainsi un procédé du type décrit précédemment, selon les caractéristiques techniques de la revendication 1.

Selon une autre caractéristique du procédé, l'actionneur comporte un mécanisme d'entraînement en pivotement du projecteur, et en ce que l'étape de compensation consiste à modifier la géométrie du mécanisme d'entraînement de manière à régler la position angulaire du projecteur.

D'autres caractéristiques et avantages apparaîtront au cours de la lecture de la description détaillée qui va suivre pour la compréhension de laquelle on se reportera aux dessins en annexe parmi lesquels :
- la figure 1 est une vue de coté qui un représente un véhicule automobile équipé d'un dispositif de réglage automatique de la position angulaire d'au moins un projecteur ;
- la figure 2 est une vue de détail à plus grande échelle qui représente schématiquement le dispositif de réglage de la figure 1 ;
- la figure 3 est un graphique qui représente une courbe de comportement idéal du dispositif de réglage de la figure 1, l'axe des ordonnées correspondant à l'assiette réelle du véhicule et l'axe des abscisses correspondant à la position angulaire du projecteur ;
- la figure 4 est un graphique similaire à celui de la figure 3 qui représente en plus une courbe de comportement imparfait du dispositif de réglage de la figure 1 ;

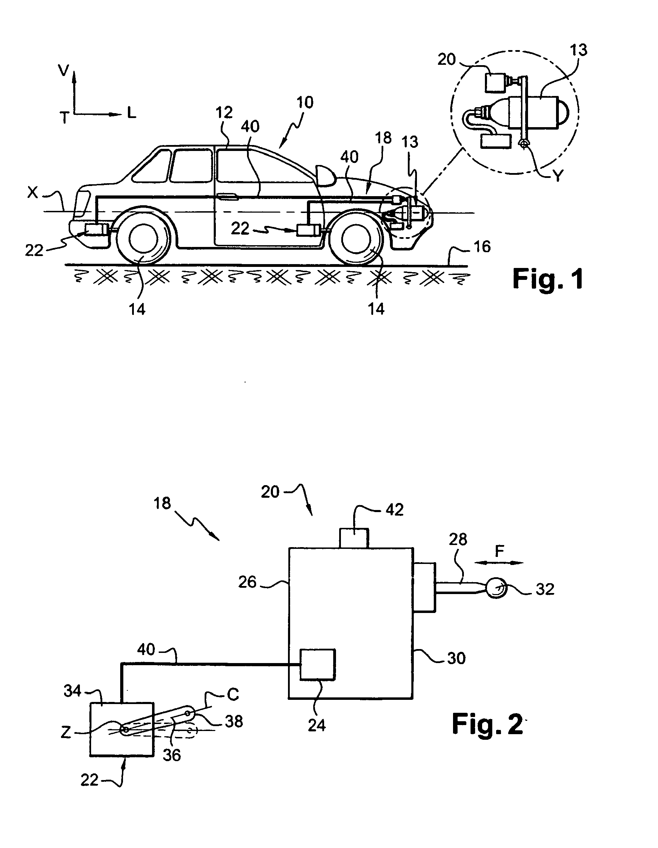

Dans la suite de la description, on adoptera à titre non limitatif une orientation longitudinale dirigée d'arrière vers l'avant, verticale dirigée de bas en haut, et transversale qui est indiquée par le trièdre L,V,T de la figure 1.

Par la suite des éléments analogues, similaires ou identiques seront désignés par des mêmes numéros de référence.

On a représenté à la figure 1 un véhicule automobile 10 qui comporte une carrosserie 12 et quatre roues 14 (dont deux sont représentées à la figure 1). Le véhicule 10 est représenté sur une surface plane horizontale 16 telle qu'une route d'axe longitudinal "L". La carrosserie 12 est orientée selon un axe principal globalement longitudinal "X" qui est ici parallèle à la route 16.

La carrosserie 12 est montée mobile verticalement par rapport à chaque roue 14 par l'intermédiaire d'amortisseurs (non représentés).

On définit pour la suite de la description l'assiette longitudinale "A" du véhicule 10 comme étant l'angle formé par l'axe principal "X" de la carrosserie 12 avec le plan horizontal de la route 16.

Le véhicule 10 comporte au moins un projecteur avant 13 qui est monté pivotant autour d'un axe transversal inférieur "Y" par rapport à la carrosserie du véhicule 10. Le projecteur 13 est agencé de manière à émettre un faisceau lumineux selon une direction globalement longitudinale vers l'avant du véhicule 10.

Le véhicule 10 est équipé d'un dispositif 18 de réglage automatique de la position angulaire du projecteur 13 par rapport à la carrosserie 12 en fonction de l'assiette longitudinale "A" du véhicule 10.

Le dispositif 18 comporte principalement un actionneur 20, au moins un capteur d'assiette 22 et une unité électronique 24 de commande de l'actionneur 20. Le dispositif 18 est représenté plus en détail à la figure 2.

L'actionneur 20 est apte à faire pivoter le projecteur 13 autour de son axe "Y". Il comporte un boîtier 26 qui renferme un moteur électrique (non représenté) qui anime un mécanisme d'entraînement en pivotement du projecteur 13.

Le mécanisme d'entraînement en pivotement est partiellement représenté à la figure 2. Il comporte notamment une tige longitudinale 28 qui est monté coulissante longitudinalement dans la face verticale frontale 30 du boîtier 26. La tige 28 comporte une extrémité libre avant 32 qui est apte à être liée en pivotement au projecteur 13, la liaison entre le projecteur 13 et la tige 28 étant agencée décalée verticalement, ici vers le haut, par rapport à l'axe de pivotement "Y" du projecteur 13, comme illustré à la figure 1.

A cet effet, l'extrémité avant 32 de la tige 28 a ici une forme de boule qui est destinée à être logée dans une cavité complémentaire (non représentée) du projecteur 13 pour procurer une liaison rotule entre la tige 28 et le projecteur 13.

Comme représenté à la figure 1, l'actionneur 20 est fixé à la carrosserie 12 du véhicule 10, derrière le projecteur 13.

Le dispositif 18 comporte ici deux capteurs d'assiette 22. Comme représenté à la figure 1, chaque capteur 22 est associé à une roue avant et arrière 14 du véhicule 10.

L'un de ces capteurs 22 est représenté en détail à la figure 2. Il comporte ici une base 34 sur laquelle un bras 36 d'axe "C" d'orientation globalement longitudinale est monté pivotant autour d'un axe "Z" transversal.

Le bras 36 comporte une extrémité libre 38 qui est destinée à être raccordée à un élément verticalement solidaire de la roue 14 associée, tandis que la base 34 est fixée solidairement à la carrosserie 12 du véhicule 10.

Ainsi, la position angulaire du bras 36 par rapport à la base 34 est proportionnelle à l'altitude de la carrosserie 12 par rapport à la roue 14 associée au capteur 22, et donc par rapport à la route 16. A partir des informations, des deux capteurs 22, on obtient une assiette mesurée "Am" du véhicule 10.

Les capteurs 22 sont aptes à émettre un signal électrique "SAm" représentatif de l'assiette mesurée "Am" du véhicule 10. Par la suite on emploiera le terme "signal d'assiette" pour désigner ce signal "SAm".

Comme représenté à la figure 2, l'unité électronique de commande 24 est avantageusement agencée dans le boîtier 26 de l'actionneur 20.

L'unité électronique de commande 24 est raccordée électriquement aux capteurs 22 par l'intermédiaire de circuits électriques 40 de manière à recevoir les signaux d'assiette "SAm" émis par les capteurs 22. A partir de ces signaux d'assiette "SAm", l'unité électronique 24 commande le moteur électrique de l'actionneur 20 de manière à faire coulisser la tige 28 selon une direction longitudinale indiquée par la flèche "F" pour provoquer le pivotement du projecteur 13 autour de son axe "Y".

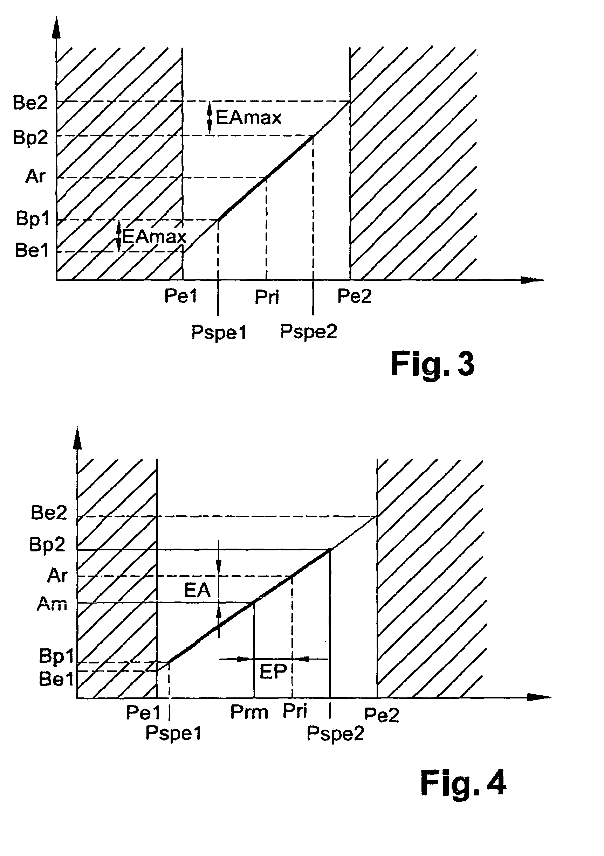

On a représenté à la figure 3 une courbe de comportement idéal du dispositif 18 pour lequel le réglage est effectué à partir d'une assiette réelle de référence "Ar" à laquelle on fait correspondre une position angulaire idéale de référence "Pri" du projecteur 13.

Par ailleurs, la capacité de traitement du signal d'assiette "SAm" de l'unité électronique de commande 24 est limitée, c'est-à-dire que l'unité électronique de commande 24 ne prendra pas en compte des assiettes mesurées situées en dehors d'une plage d'efficacité délimitée par des bornes d'efficacité inférieure "Be1" et supérieure "Be2".

Comme représenté à la figure 3, au-delà des bornes d'efficacité "Be1", "Be2", l'unité électronique de commande 24 ne peut pas commander le pivotement du projecteur 13 au-delà d'une position angulaire extrême inférieure "Pe1" et supérieure "Pe2".

La courbe de comportement idéal comporte une pente ascendante rectiligne qui fait correspondre chaque valeur d'assiette mesurée de la plage d'efficacité à une position angulaire idéale particulière du projecteur 13.

De manière connue, l'actionneur 20 comporte en outre un organe de calibration (non représenté) qui permet de régler la longueur de la tige 28 sans faire fonctionner le moteur électrique. L'organe de calibration est ici commandé par une molette rotative 42 qui est agencée sur une face horizontale supérieure du boîtier 26.

Comme expliqué précédemment, le capteur 22 est monté sur le véhicule 10 avec un intervalle de tolérance.

Idéalement, lorsque l'assiette réelle du véhicule 10 coïncide avec son assiette de référence "Ar", le capteur 22 est monté de manière que son bras 36 soit dans une position angulaire de référence qui est représentée en traits interrompus à la figure 2. Le comportement du dispositif est alors illustré à la figure 3. La courbe de comportement idéal de la figure 3 se retrouve en trait gras à la figure 4.

Cependant, à cause de la tolérance de montage des capteurs 22, lorsque le véhicule 10 a une assiette réelle de référence "Ar", la position angulaire du bras 36 du capteur 22, qui est représentée en trait plein à la figure 2, est susceptible d'être différente de sa position angulaire de référence. La position angulaire de référence du capteur 22 ne coïncide donc pas avec l'assiette réelle de référence. Il en résulte un écart "EA" entre l'assiette réelle de référence "Ar" du véhicule 10 et l'assiette mesurée de référence "Am".

Cet écart "EA" est illustré à la figure 4. La courbe représente la position angulaire du projecteur 13 en fonction de l'assiette mesurée par les capteurs 22 qui sont montés avec une tolérance. Par la suite on l'appellera "courbe de comportement imparfait". On voit sur cette courbe l'écart "EA" entre l'assiette réelle de référence "Ar" du véhicule 10 et l'assiette mesurée de référence "Am".

On observe que l'écart "EA" entre l'assiette mesurée de référence "Am" et l'assiette réelle de référence "Ar" se traduit par un écart "EP" entre la position angulaire réelle de référence "Prm" et la position angulaire idéale de référence "Pri" du projecteur 13, c'est-à-dire que la position angulaire réelle de référence "Prm" du projecteur 13 ne coïncide pas avec sa position angulaire idéale de référence "Pri".

L'invention propose donc un procédé pour étalonner le dispositif de réglage automatique 18 qui comporte une étape de compensation de l'écart "EA" entre l'assiette mesurée de référence "Am" et l'assiette réelle de référence "Ar".

Selon les enseignements de l'invention, l'étape de compensation consiste à corriger mécaniquement la position angulaire "Prm" du projecteur 13 de manière à la faire coïncider avec sa position angulaire idéale "Pri".

Cette étape est ici mise en oeuvre en faisant tourner la molette 42 pour régler la longueur de la tige 28.

Une fois cette opération réalisée, le pivotement du projecteur 13 se fera en prenant comme référence cette position angulaire idéale "Pri".

Ceci se traduit sur la figure 4 par un déplacement du point de référence qui fait correspondre l'assiette mesurée de référence "Am" à la position angulaire réelle de référence "Prm" vers le point de référence idéal qui fait correspondre l'assiette réelle de référence "Ar" à la position angulaire idéale de référence "Pri".

Avantageusement, cette étape de compensation de l'écart "EA" entre l'assiette mesurée de référence "Am" et l'assiette réelle de référence "Ar" permet aussi de rattraper la tolérance mécanique de montage de l'actionneur et du projecteur 13 par rapport à la carrosserie 12.

Par ailleurs, la plage de positions angulaires que le projecteur 13 doit pouvoir couvrir lors de son utilisation est généralement spécifiée par le constructeur du véhicule 10 et elle est délimitée par des positions angulaires extrêmes prédéterminées inférieure "Pspé1" et supérieure "Pspé2". Cette plage de positions angulaires correspond à une plage spécifiée d'assiettes réelles qui est délimitée par des bornes prédéterminées inférieure "Bp1" et supérieure "Bp2". Ces bornes "Bp1" et "Bp2" sont représentées à la figure 3.

L'écart "EA" entre l'assiette réelle de référence "Ar" et l'assiette mesurée de référence "Am" se répercute aux bornes "Be1", "Be2" de la plage d'efficacité du dispositif 18. En effet, comme expliqué précédemment, la courbe de comportement imparfait est constituée par la partie commune à la courbe de fonctionnement théorique et à la courbe de fonctionnement avec compensation d'écart. Elle est en quelque sorte obtenue par une translation de la courbe de comportement idéal. Or, les bornes d'efficacité "Be1", "Be2" suivent aussi le mouvement de translation, tandis que les bornes prédéterminées "Bp1", Bp2" de la plage spécifiée d'assiettes réelles ne bougent pas.

Ainsi, si l'écart "EA" entre l'assiette mesurée "Am" et l'assiette réelle "Ar" est trop grand, l'une des positions spécifiées "Pspe1 ", "Pspe2" est susceptible d'être en dehors de la plage d'efficacité du dispositif 18.

Afin de permettre au projecteur 13 d'occuper toutes les positions angulaires de la plage spécifiée par le constructeur, l'invention propose aussi de concevoir l'unité électronique de commande 24 de manière à ce que la plage d'efficacité soit contienne entièrement la plage spécifiée avec une marge de sécurité, c'est-à-dire que l'étendue de la plage d'efficacité est supérieure à l'étendue de la plage spécifiée.

Plus particulièrement, l'intervalle de tolérance de montage des capteurs 22 étant connu, l'écart maximum "EAmax" qui est susceptible d'exister entre l'assiette réelle de référence "Ar" et l'assiette mesurée de référence "Am" est aussi connu. On conçoit donc l'unité de commande 24 pour que la marge de sécurité soit apte à absorber cet écart maximum"EAmax".

En se reportant à la figure 3, on a représenté la marge de sécurité aux deux bornes prédéterminées "Bp1", "Bp2" de la plage spécifiée. Ainsi, pour un dispositif de réglage 18 ayant un comportement idéal, la plage spécifiée d'assiettes réelles est entièrement incluse dans la plage d'efficacité de manière qu'un écart correspondant à l'écart maximum "EAmax" soit réservé entre les bornes spécifiées "Bp1", "Bp2" et les bornes d'efficacité associées "Be1", "Be2".

Ainsi, comme représenté à la figure 4, lorsque les capteurs sont montés avec une tolérance, ceci se traduit par une limitation de la courbe de comportement imparfait (par rapprochement de ses bornes d'extrémité) selon la direction de la pente de la courbe de comportement idéal, dans un sens ou dans l'autre. Lorsque l'écart "EA" est maximum entre l'assiette mesurée de référence "Am" et l'assiette réelle de référence "Ar", l'une des bornes d'efficacité, ici la borne inférieure "Be1", glisse jusqu'à être confondue avec la borne spécifiée correspondante "Bp1", tandis que l'autre borne spécifiée "Bp2" est comprise dans la plage d'efficacité.

Ainsi, la plage spécifiée est toujours entièrement incluse dans la plage d'efficacité.

Selon l'invention, pour établir la marge de sécurité, on prend en compte les intervalles de tolérance mécanique de montage de l'actionneur 20 et du projecteur 13.

Bien que ce procédé soit adaptable à des dispositifs 18 comprenant tous types d'actionneur et d'unité électronique de commande, ce procédé selon l'invention est particulièrement adapté à des dispositifs 18 qui ne comportent pas de potentiomètres ou autres organes pour ajuster la tension du signal d'assiette. Le dispositif 18 est ainsi avantageusement moins onéreux à fabriquer.

Le procédé est aussi particulièrement adapté à des unités électroniques de commande constituées d'éléments analogiques. Mais il est aussi applicable à des unités électroniques de commande comportant des étapes de traitement numériques.

## Revendications

1. Procédé d'étalonnage d'un dispositif (18) de réglage automatique de la position angulaire d'au moins un projecteur (13) de véhicule automobile (10) qui est monté pivotant autour d'un axe transversal (Y) par rapport à la carrosserie (12) du véhicule (10), le dispositif de réglage (18) réglant la position angulaire du projecteur (13) en fonction de l'assiette longitudinale de la carrosserie (12) du véhicule (10),
le dispositif de réglage automatique (18) comprenant :
- au moins un actionneur (20) apte à faire pivoter le projecteur (13) ;
- au moins un capteur (22) qui mesure l'assiette du véhicule (Am) et qui émet un signal d'assiette (SAm) représentatif de l'assiette instantanée mesurée (Am) du véhicule (10), un écart (EA) étant susceptible d'exister entre l'assiette mesurée (Am) et l'assiette réelle (Ar) de la carrosserie (12) du véhicule (10) ;
- une unité électronique de commande (24) de l'actionneur (20) en fonction du signal d'assiette mesurée (SAm) qui est apte à traiter le signal d'assiette (SAm) pour une plage d'assiettes mesurées (Am) qui est délimitée par des bornes extrêmes d'efficacité (Be1, Be2) ;
le procédé comportant une étape de compensation de l'écart (EA) entre l'assiette réelle (Ar) et l'assiette mesurée (Am) consistant à corriger mécaniquement la position angulaire réelle (Prm) du projecteur correspondant à une assiette mesurée (Am) de manière à la faire coïncider avec une position angulaire idéale (Pri) correspondant à l'assiette réelle (Ar) et dans une plage spécifiée de positions angulaires correspondant à une plage spécifiée d'assiettes réelles délimitée par des bornes prédéterminées (Bp1, Bp2), les bornes extrêmes d'efficacité (Be1, Be2) de l'unité électronique de commande (24) ayant des valeurs qui sont en dehors des bornes prédéterminées (Bp1, Bp2) de la plage spécifiée d'assiettes réelles, l'écart entre les bornes spécifiées (Bp1, Bp2) et les bornes d'efficacité associées (Be1, Be2) constituant une marge de sécurité permettant de compenser l'écart (EA) entre l'assiette mesurée (Am) et l'assiette réelle (Ar), de manière que le projecteur (13) puisse être commandé dans toute l'étendue de sa plage spécifiée de positions angulaires;
**caractérisé en ce que** pour établir la marge de sécurité, on prend en compte les intervalles de tolérance mécanique de montage de l'actionneur (20) et du projecteur (13).

2. Procédé selon la revendication précédente, **caractérisé en ce que** l'actionneur comporte un mécanisme (28) d'entraînement en pivotement du projecteur (13), et **en ce que** l'étape de compensation consiste à modifier la géométrie du mécanisme d'entraînement (28) de manière à régler la position angulaire (Prm) du projecteur (13).

## Claims

1. Method of calibrating a device (18) for the automatic adjustment of the angular position of at least one headlight (13) of a motor vehicle (10) which is mounted so as to pivot about a transverse axis (Y) with respect to the body (12) of the vehicle (10), the adjustment device (18) adjusting the angular position of the headlight (13) according to the longitudinal attitude of the body (12) of the vehicle (10),
the automatic adjustment device (18) comprising:
- at least one actuator (20) able to make the headlight (13) pivot;
- at least one sensor (22) which measures the attitude of the vehicle (Am) and which emits an attitude signal (SAm) representing the measured instantaneous attitude (Am) of the vehicle (10), a difference (EA) being liable to exist between the measured attitude (Am) and the actual attitude (Ar) of the body (12) of the vehicle (10);
- an electronic unit (24) controlling the actuator (20) according to the measured attitude signal (SAm) which is able to process the attitude signal (SAm) for a range of measured attitudes (Am) which is delimited by extreme efficacy delimiters (Be1, Be2);
the method comprising a step of compensating for the difference (EA) between the actual attitude (Ar) and the measured attitude (Am), consisting of mechanically correcting the actual angular position (Prm) of the headlight corresponding to a measured attitude (Am) so as to make it coincide with an ideal angular position (Pri) corresponding to the actual attitude (Ar), and in a specified range of angular positions corresponding to a specified range of actual attitudes delimited by predetermined delimiters (Bp1, Bp2), the extreme efficiency delimiters (Be1, Be2) of the electronic control unit (24) having values that are outside predetermined delimiters (Bp1, Bp2) of the specified range of actual attitudes, the difference between the specified delimiters (Bp1, Bp2) and the associated efficacy delimiters (Be1, Be2) constituting a safety margin for compensating for the difference (EA) between the measured attitude (Am) and the actual attitude (Ar), so that the headlight (13) can be controlled throughout the extent of its specified range of angular positions;
**characterised in that,** in order to establish the safety margin, account is taken of the mechanical tolerance ranges for mounting the actuator (20) and the headlight (13).

2. Method according to the preceding claim, **characterised in that** the actuator comprises a mechanism (28) for pivotally driving the headlight (13), and **in that** the compensation step consists of modifying the geometry of the drive mechanism (28) so as to adjust the angular position (Prm) of the headlight (13).

## Patentansprüche

1. Verfahren zum Kalibrieren einer Vorrichtung (18) zum automatischen Einstellen des Neigungswinkels wenigstens eines Scheinwerfers (13) eines Kraftfahrzeugs (10), der bezüglich der Karosserie (12) des Fahrzeugs (10) um eine Querachse (Y) schwenkbar montiert ist, wobei die Stellvorrichtung (18) den Neigungswinkel des Scheinwerfers (13) in Abhängigkeit vom Nickwinkel der Karosserie (12) des Fahrzeugs (10) einstellt,
wobei die automatische Stellvorrichtung (18) umfasst:
- wenigstens ein Stellglied (20), das den Scheinwerfer (13) zu schwenken vermag;
- wenigstens einen Sensor (22), der den Fahrzeugnickwinkel (Am) misst und ein Nickwinkelsignal (SAm) abgibt, das für den gemessenen momentanen Nickwinkel (Am) des Fahrzeugs (10) repräsentativ ist, wobei zwischen dem gemessenen Nickwinkel (Am) und dem tatsächlichen Nickwinkel (Ar) der Karosserie (12) des Fahrzeugs (10) eine Abweichung (EA) bestehen kann;
- eine elektronische Einheit (24) zum Steuern des Stellgliedes (20) in Abhängigkeit von dem gemessenen Nickwinkelsignal (SAm), die das Nickwinkelsignal (SAm) für einen Bereich gemessener Nickwinkel (Am) zu verarbeiten vermag, der durch Wirksamkeitsendgrenzen (Be1, Be2) begrenzt ist;
wobei das Verfahren einen Schritt zum Kompensieren der Abweichung (EA) zwischen dem tatsächlichen Nickwinkel (Ar) und dem gemessenen Nickwinkel (Am) aufweist, der darin besteht, den tatsächlichen Neigungswinkel (Prm) des Scheinwerfers, der einem gemessenen Nickwinkel (Am) entspricht, solchermaßen mechanisch zu korrigieren, dass dieser mit einem dem tatsächlichen Nickwinkel (Ar) entsprechenden idealen Neigungswinkel (Pri) und in einem festgelegten Neigungswinkelbereich übereinstimmt, der einem festgelegten tatsächlichen Nickwinkelbereich entspricht, der durch vorbestimmte Grenzen (Bp1, Bp1) begrenzt ist, wobei die Wirksamkeitsendgrenzen (Be1, Be2) der elektronischen Steuereinheit (24) Werte haben, die außerhalb der vorbestimmten Grenzen (Bp1, Bp2) des festgelegten tatsächlichen Nickwinkelbereichs liegen, wobei die Abweichung zwischen den festgelegten Grenzen (Bp1, Bp2) und den zugeordneten Wirksamkeitsgrenzen (Be1, Be2) eine Sicherheitsspanne bildet, welche die Abweichung (EA) zwischen dem gemessenen Nickwinkel (Am) und dem tatsächlichen Nickwinkel (Ar) derart zu kompensieren erlaubt, dass der Scheinwerfer (13) über die gesamte Erstreckung seines festgelegten Neigungswinkelbereichs gesteuert werden kann,
**dadurch gekennzeichnet, dass** beim Einrichten der Sicherheitsspanne die mechanischen Montagetoleranzintervalle des Stellgliedes (20) und des Scheinwerfers (13) berücksichtigt werden.

2. Verfahren nach dem vorhergehenden Anspruch,
**dadurch gekennzeichnet, dass** das Stellglied einen Antriebsmechanismus (28) zum Schwenken des Scheinwerfers (13) umfasst, und dass der Kompensierungsschritt darin besteht, die Geometrie des Antriebsmechanismus (28) so zu verändern, dass der Neigungswinkel (Prm) des Scheinwerfers (13) eingestellt wird.
